(19) Europäisches Patentamt
European Patent Office
Office européen des brevets

(11) Publication number: **0 032 832 B1**

(12) **EUROPEAN PATENT SPECIFICATION**

(45) Date of publication of patent specification: **09.02.83**

(21) Application number: **81300214.4**

(22) Date of filing: **19.01.81**

(51) Int. Cl.³: **A 01 N 47/16** //(A01N47/16, 47/02)

(54) **Synergistic herbicidal compositions and use thereof.**

(30) Priority: **21.01.80 US 109585**

(43) Date of publication of application:
**29.07.81 Bulletin 81/30**

(45) Publication of the grant of the patent:
**09.02.83 Bulletin 83/6**

(84) Designated Contracting States:
**BE FR GB IT**

(56) References cited:
**US - A - 4 164 412**

**CHEMICAL ABSTRACTS, vol. 83, no. 15, 13th October 1975, page 160, no. 127496k Columbus, Ohio, U.S.A.**

(73) Proprietor: **STAUFFER CHEMICAL COMPANY**
**Westport Connecticut 06880 (US)**

(72) Inventor: **Groenwold, Bareld Egge**
**Rte de la Bellangere**
**CH-1261 Givrins (CH)**

(74) Representative: **Smith, Sydney et al,**
**Elkington and Fife High Holborn House 52/54**
**High Holborn**
**London WC1V 6SH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

EP 0 032 832 B1

# Synergistic herbicidal compositions and use thereof

The protection of crops from weeds and other vegetation which inhibit crop growth by consuming valuable acreage or soil nutrients is a constantly recurring problem in agriculture. To help combat this problem, researchers in the field of synthetic chemistry have produced an extensive variety of chemicals and chemical formulations effective in the control of such unwanted growth. Chemical herbicides of many types have been disclosed in the literature and a large number are in commercial use.

In many cases, active herbicides have been shown to be more effective in combination than when applied individually. The result is often termed "synergism," since the combination demonstrates a potency or activity level exceeding that which it would be expected to have, based on a knowledge of the individual potencies of the components. The present invention resides in the discovery that a combination of an alkyl 1-hexamethyleneiminecarbothiolate and 1,1,1,-trifluoro-N-[2-methyl-4-(phenylsulfonyl)phenyl]-methanesulfonamide displays this synergistic effect.

The compounds forming the combination which is the subject of the present invention are independently known in the art as active herbicides. Alkyl 1-hexamethyleneiminecarbothiolates are disclosed as herbicides in U.S. Patent Nos. 3,198,786 (Tilles et al., August 3, 1965) and 3,573,031 (Tilles, March 30, 1971). Perfluoroalkylsulfonamidoaryl compounds are similarly disclosed in U.S. Patent No. 4,005,141 (Moore et al., January 25, 1977).

In addition, certain thiolcarbamates similar in structure to the alkyl 1-hexamethyleneiminecarbothiolates of the present invention are known to exhibit synergistic activity when combined with s-triazines, as disclosed in U.S. Patent No. 3,037,853 (Luckenbaugh, June 5, 1962). The same type of thiolcarbamates are part of a four-component synergistic combination disclosed in U.S. Patent No. 3,870,502 (Fischer, March 11, 1975).

It has now been found that synergism in the control of undesirable vegetation is exhibited by compositions comprising an alkyl 1-hexamethyleneiminecarbothiolate and 1,1,1-trifluoro-N-[2-methyl-4-(phenylsulfonyl)phenyl]-methanesulfonamide. The former has the formula

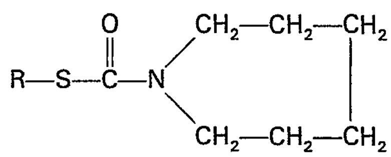

where R is $C_1$—$C_4$ alkyl, and the latter has the formula

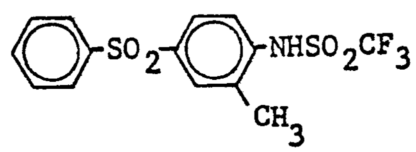

Each of these compounds can be prepared by procedures described in the patent references mentioned above.

The term "alkyl" as used herein includes both straight-chain and branched-chain groups. Examples are methyl, ethyl, propyl, isopropyl, butyl, sec-butyl. The carbon atom range is inclusive of both upper and lower limits.

The terms "synergism" and "synergistic" are used herein to convey the result observed when a combination of herbicides demonstrates a potency in excess of that which the combination would be expected to produce on the basis of the potencies of each herbicide applied individually.

The term "herbicide" is used herein to denote a compound which controls or modifies the growth of plants. The term "herbicidally effective amount" is used to indicate the quantity of such a compound or combination of such compounds which is capable of producing a controlling or modifying effect. Controlling or modifying effects include all deviations from natural development, for example, killing, retardation, defoliation, desiccation, regulation, stunting, tillering, stimulating, leaf burn, dwarfing and the like. The term "plants" is used to include germinating seeds, emerging seedlings and established vegetation, including roots and above-ground portions.

In the compositions of this invention, the carbothiolate:sulfonamide weight ratio at which the herbicidal response is synergistic lies within the range of 0.1:1 to 10:1, preferably 0.1:1 to 5:1.

Application rates will depend upon the weeds to be controlled and the degree of control desired. In general, the compositions of this invention are most efficiently employed at a rate of 0.01 to 50 pounds per acre (0.011 to 56 kilograms per hectare) of the active ingredients, preferably 0.1 to 25 pounds per acre (0.11 to 28 kilograms per hectare).

The following examples are offered to demonstrate the synergistic herbicidal activity of the present compositions, and are not intended to limit the scope of the invention in any manner.

Example I

Weed control tests were performed on the weeds indigenous to an adobe clay soil obtained from the vicinity of Biggs, California. The soil was placed in aluminum flats measuring 20.0 × 13.8 × 5.5 cm to a depth of about 4.0 cm. The flats were then flooded with water and placed in a greenhouse where the water level and the ambient temperature were held constant. A variety of indigenous weeds sprouted from the soil.

Six weeks after flooding, the flats were treated with the test compounds, ethyl 1-hexamethyleneiminecarbothiolate and 1,1,1-trifluoro-N-[2-methyl-4-(phenylsulfonyl)phenyl]-methanesulfonamide. Treatment was achieved by adding predetermined quantities of the compounds directly to the flood water above the soil. The quantities added were such that the amount of each test compound added per flat corresponded to the desired application rate in pounds per acre, the application rates varying from flat to flat. In the control flats, the test compounds were applied alone at various application rates, whereas in the test flats, both compounds were applied to the same flat at varying ratios. Additional flats were left untreated, to serve as a standard for measuring the extent of weed control in the treated flats.

Five weeks after treatment, the control and test flats were compared to the standard and each weed species was rated visually in terms of percent control ranging from 0% to 100% with 0% representing the same degree of growth as the same row in the standard and 100% representing complete kill of all weeds in the row. All types of plant injury were taken into consideration.

The results of these tests are listed in Table I in the columns headed by the symbol "O" (indicating the "observed" results). These results are compared with the expected results, shown in the columns headed by the symbol "E", derived from the control data using Limpel's formula (Limpel et al., 1962, "Weed Control by Dimethylchloroterephthalate Alone and in Certain Combinations," *Proc. NEWCC.*, Vol. 16, pp 48—53):

$$E = X + Y - \frac{XY}{100}$$

where X = observed percent injury when one of the herbicides is used alone, and
Y = observed percent injury when the other herbicide is used alone.

An asterisk (*) is used to indicate the tests where the results show synergism, i.e., where the observed result exceeds the expected result. Since synergism can only be detected when the expected result is less than 100, tests where both the E and O values are 100 are left blank.

The vertical columns in the table refer to the following weeds:

(1) Red stem (*Ammania coccinea*)

(2) *Rotella spp.*

(3) Water hyssop (*Bacopa rotundifolia*)

(4) Naiad (*Potamogeton spp.*)

(5) Filamentous algae

(6) Small-flowered umbrella sedge (*Cyprus difformis*)

(7) Spikerushes (*Eleocharis spp.*)

TABLE I

HERBICIDE SYNERGISM TEST RESULTS

Test Compounds:

A : 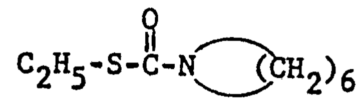

B : 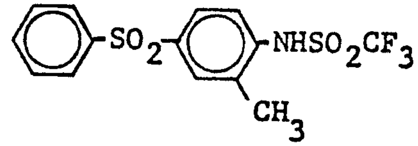

| Application Rates (lb/A) | | Percent Control — O: Observed E: Expected | | | | | | | | | | | | | |
|---|---|---|---|---|---|---|---|---|---|---|---|---|---|---|---|
| | | (1) | | (2) | | (3) | | (4) | | (5) | | (6) | | (7) | |
| A | B | O | E | O | E | O | E | O | E | O | E | O | E | O | E |
| Control Data: | | | | | | | | | | | | | | | |
| 0.5 | — | 0 | | 0 | | 0 | | 0 | | 0 | | 0 | | 0 | |
| 1.0 | — | 0 | | 0 | | 0 | | 0 | | 0 | | 80 | | 40 | |
| 2.0 | — | 0 | | 0 | | 10 | | 0 | | 0 | | 80 | | 90 | |
| — | 0.125 | 0 | | 0 | | 20 | | 100 | | 20 | | 30 | | 40 | |
| — | 0.25 | 0 | | 0 | | 60 | | 100 | | 30 | | 95 | | 95 | |
| — | 0.5 | 95 | | 10 | | 100 | | 95 | | 10 | | 100 | | 100 | |
| — | 1.0 | 100 | | 50 | | 98 | | 100 | | 30 | | 100 | | 100 | |

TABLE I continued

HERBICIDE SYNERGISM TEST RESULTS

| Application Rates (lb/A) | | Percent Control — O: Observed E: Expected | | | | | | | | | | | | | |
|---|---|---|---|---|---|---|---|---|---|---|---|---|---|---|---|
| | | (1) | | (2) | | (3) | | (4) | | (5) | | (6) | | (7) | |
| A | B | O | E | O | E | O | E | O | E | O | E | O | E | O | E |
| Test Data: | | | | | | | | | | | | | | | |
| 0.5 | 0.125 | 0 | 0 | 0 | 0 | 40* | 20 | 0 | 100 | 10 | 20 | 75* | 30 | 80* | 40 |
| 0.5 | 0.25 | 50* | 0 | 10* | 0 | 70* | 60 | | | 30 | 30 | 100* | 95 | 100* | 95 |
| 0.5 | 0.5 | 100* | 95 | 30* | 10 | | | 100* | 95 | 20* | 10 | | | | |
| 0.5 | 1.0 | | | 60* | 50 | | | | | 20 | 30 | | | | |
| 1.0 | 0.125 | 70* | 0 | 0 | 0 | 50* | 20 | | | 10 | 20 | 98* | 86 | 100* | 64 |
| 1.0 | 0.25 | 95* | 0 | 30* | 0 | 85* | 60 | | | 20 | 30 | | | | |
| 1.0 | 0.5 | 100* | 95 | 50* | 10 | 95 | 100 | 90 | 95 | 20* | 10 | | | | |
| 1.0 | 1.0 | | | 10 | 50 | | | | | 10 | 30 | | | | |
| 2.0 | 0.125 | 50* | 0 | 0 | 0 | 80* | 28 | 10 | 100 | 0 | 20 | 60 | 86 | 50 | 94 |
| 2.0 | 0.25 | 98* | 0 | 30* | 0 | 98* | 64 | | | 30 | 30 | | | | |
| 2.0 | 0.5 | 100* | 95 | 30* | 10 | 95 | 100 | 80 | 95 | 20* | 10 | | | | |
| 2.0 | 1.0 | | | 30 | 50 | 95 | 99 | 85 | 100 | 20 | 30 | | | | |

*Synergistic effect shown.

Blank spaces indicate 100% control in both observed and expected results, precluding evaluation of synergism.

Example II

A similar series of tests was run on the same compounds, this time using a 1.25-cm layer of adobe clay soil on top of a 5-cm layer of sandy loam soil, the latter containing no indigenous weeds. In addition to the water hyssop, Rotella, filamentous algae, and spikerushes, an algae (*Chara sp.*) (8) and an unidentified broadleaf species (9) also sprouted from the clay soil. The test compounds were applied two weeks after flooding and injury ratings were taken seven weeks later. The results are shown in Table II.

TABLE II

HERBICIDE SYNERGISM TEST RESULTS

Test Compounds:

A : 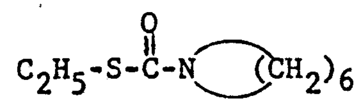

B : 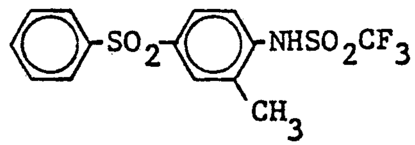

| Application Rates (lb/A) | | Percent Control — O: Observed E: Expected | | | | | | | | | | | |
|---|---|---|---|---|---|---|---|---|---|---|---|---|---|
| | | (2) | | (3) | | (5) | | (7) | | (8) | | (9) | |
| A | B | O | E | O | E | O | E | O | E | O | E | O | E |
| Control Data: | | | | | | | | | | | | | |
| 0.25 | — | 0 | | 0 | | 0 | | 0 | | 0 | | 0 | |
| 0.5 | — | 0 | | 0 | | 0 | | 0 | | 0 | | 0 | |
| 1.0 | — | 0 | | 0 | | 0 | | 10 | | 0 | | 40 | |
| — | 0.25 | 0 | | 98 | | 0 | | 85 | | 0 | | 30 | |
| — | 0.5 | 0 | | 95 | | 0 | | 90 | | — | | 40 | |
| — | 1.0 | 10 | | 98 | | 0 | | 85 | | 0 | | 40 | |

TABLE II continued

HERBICIDE SYNERGISM TEST RESULTS

| Application Rates (lb/A) | | Percent Control — O: Observed E: Expected | | | | | | | | | | | |
|---|---|---|---|---|---|---|---|---|---|---|---|---|---|
| | | (2) | | (3) | | (5) | | (7) | | (8) | | (9) | |
| A | B | O | E | O | E | O | E | O | E | O | E | O | E |
| Test Data: | | | | | | | | | | | | | |
| 0.25 | 0.25 | 0 | 0 | 90 | 98 | 0 | 0 | 50 | 85 | 0 | 0 | 20 | 30 |
| 0.25 | 0.5 | 0 | 0 | 95 | 95 | 0 | 0 | 80 | 90 | 0 | — | 30 | 40 |
| 0.25 | 1.0 | 0 | 10 | | | 90* | 0 | 90* | 85 | 0 | 0 | 40 | 40 |
| 0.5 | 0.25 | 0 | 0 | 95 | 98 | 0 | 0 | 90* | 85 | 0 | 0 | 40* | 30 |
| 0.5 | 0.5 | 0 | 0 | 98* | 95 | 0 | 0 | 80 | 90 | 0 | — | 40 | 40 |
| 0.5 | 1.0 | 10 | 10 | | | 10* | 0 | 95* | 85 | 0 | 0 | 70* | 40 |
| 1.0 | 0.25 | 0 | 0 | 95 | 98 | 0 | 0 | 90* | 87 | 0 | 0 | 40 | 58 |
| 1.0 | 0.5 | 0 | 0 | 99* | 95 | 0 | 0 | 90 | 90 | 0 | — | 40 | 64 |
| 1.0 | 1.0 | 10 | 10 | 95 | 98 | 10* | 0 | 95* | 87 | 0 | 0 | 95* | 64 |

*Synergistic effect shown.

Dash indicates test failed.

Blank spaces indicate 100% control of both observed and expected results, precluding evaluation of synergism.

The compositions of the present invention are useful as herbicides in controlling the growth of undesirable vegetation by pre-emergence or post-emergence application to the locus where control is desired, including pre-plant and post-plant soil incorporation as well as surface application. The compositions are generally embodied in formulations suitable for convenient application. In general, such formulations will contain inert or occasionally active ingredients or diluent carriers in addition to the active compound. Examples of such ingredients or carriers are water, organic solvents, dust carriers, granular carriers, surface active agents, oil and water, water in oil emulsions, wetting agents, dispersing agents, and emulsifying agents. The herbicidal formulations generally take the form of dusts, wettable powders, granules, solutions, or emulsifiable concentrates.

Dusts are free-flowing powder compositions containing the herbicidal compound impregnated on a particulate carrier. The particle size of the carrier is usually in the range of from 30 to 50 microns. Examples of suitable carriers are talc, bentonite, diatomaceous earth, and pyrophyllite. Anticaking and antistatic agents can be added, if desired. The composition generally contains up to 50% of active ingredient.

Wettable powders are finely divided compositions comprising a particulate carrier impregnated with the herbicidal compound and additionally containing one or more surface active agents. The surface active agent promotes rapid dispersion of the powder in aqueous medium to form stable, sprayable suspensions. A wide variety of surface active agents can be used, for example, long chain fatty alcohols and alkali metal salts of the sulfated fatty alcohols; salts of sulfonic acid; esters of long chain fatty acids; and polyhydric alcohols, in which the alcohol groups are free, omega-substituted polyethylene glycols of relatively long chain length.

Granules comprise the herbicidal composition impregnated on a particulate inert carrier having a particle size of about 1 to 2 millimeters in diameter. The granules can be made by spraying a solution of the active ingredient in a volatile solvent onto the granular carrier. Suitable carriers in preparation of granules include clay, vermiculite, sawdust, granular carbon, and the like.

The herbicidal compositions can also be applied to the soil in the form of a solution in a suitable solvent. Solvents frequently used in herbicidal formulations include kerosene, fuel oil, xylene, petroleum fractions with boiling ranges above xylene, and aromatic petroleum fractions rich in methylated naphthalenes.

Emulsifiable concentrates consist of an oil solution of the herbicide along with an emulsifying agent. Prior to use the concentrate is diluted with water to form a suspended emulsion of oil droplets. The emulsifiers used are usually a mixture of anionic and nonionic surfactants. Other additives such as spreading agents and stickers can be included in the emulsifiable concentrate.

The formulations described above, employing phytotoxic or herbicidally effective amounts of the compositions described herein, are applied to the loci where control is desired in any conventional manner. The loci referred to above include soil, seeds, seedlings, and the actual plants, as well as flooded fields. Dusts and liquid compositions can be applied by the use of powder dusters, boom and hand sprayers and spray dusters. The compositions can also be applied from airplanes as dusts or sprays because they are effective in very low dosages. In order to modify or control growth of germinating seeds or emerging seedlings, as a typical example, the dust and liquid compositions are applied to the soil according to conventional methods and are distributed in the soil to a depth of at least one-half inch below the soil surface. It is not necessary that the phytotoxic compositions be admixed with the soil particles. Instead, these compositions can be applied merely by spraying or sprinkling the surface of the soil. The phytotoxic compositions of this invention can also be applied by addition to irrigation water supplied to the field to be treated. This method of application permits the penetration of the compositions into the soil as the water is absorbed therein. Dust compositions, granular compositions or liquid formulations applied to the surface of the soil can be distributed below the surface of the soil by conventional means such as discing, dragging, or mixing operations.

## Claims

1. A synergistic herbicidal composition comprising a mixture of

(a) an alkyl 1-hexamethyleneiminocarbothiolate of the general formula

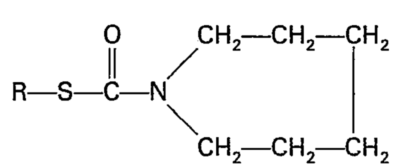

where R is $C_1$—$C_4$ alkyl, and

(b) 1,1,1-trifluoro-N-[2-methyl-4-(phenylsulfonyl)phenyl]-methanesulfonamide, in a weight ratio of (a) to (b) of from 0.1:1 to 10:1.

2. A composition as claimed in claim 1 characterised in that the weight ratio of (a) to (b) is from 0.1:1 to 5:1.

3. A composition as claimed in claim 1 or claim 2 characterised in that the alkyl 1-hexamethyleneiminecarbothiolate is one in which R is ethyl.

4. A herbicidal composition as claimed in any of claims 1 to 3 including an inert carrier or diluent and optionally other active ingredients.

5. A method of controlling undesirable vegetation characterised in that one applies to the locus where control is desired a herbicidally effective amount of a composition comprising a mixture of

(a) an alkyl 1-hexamethyleneiminocarbothiolate of the formula

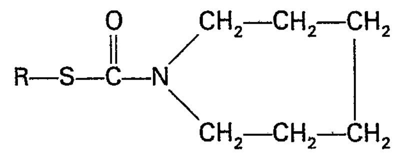

where R is $C_1$—$C_4$, and

(b) 1,1,1-trifluoro-N-[2-methyl-4-(phenylsulphonyl)phenyl-methanesulfonamide, at a weight ratio of (a) to (b) of from 0.1:1 to 10:1.

6. A method as claimed in claim 5 characterised in that the weight ratio of (a) to (b) is from 0.1:1 to 5:1.

7. A method as claimed in claim 5 or claim 6 characterised in that the alkyl 1-hexamethyleneiminecarbothiolate is one in which R is ethyl.

8. A method for the preparation of a herbicidal composition as claimed in claim 4 characterised in that component (a) and component (b) as defined in claim 1 are incorporated in an inert carrier or diluent in the ratio defined in claim 1.

**Revendications**

1. Composition herbicide synergique caractérisée en ce qu'elle comprend un mélange de:

a. — un 1-hexamethyleneiminocarbothiolate d'alcoyle représenté par la formule générale

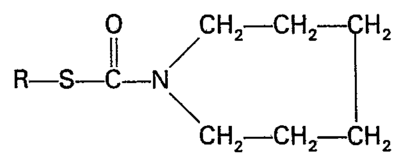

dans laquelle R représente un groupe alcoyle en $C_1$ à $C_4$, et;

b. — un 1,1,1-trifluoro-N-{2-méthyl-4-(phénylsulfonyl)-phényl}-méthanesulfonamide, selon un rapport pondéral de a/b compris entre 0,1/1 et 10/1.

2. Composition selon la revendication 1, caractérisée en ce que le rapport pondéral de a/b est compris entre 0,1/1 et 5/1.

3. Composition selon la revendication 1 ou 2, caractérisée en ce que le 1-hexamethyleneiminocarbothiolate d'alcoyle est un produit dans lequel R représente un groupe éthyle.

4. Composition herbicide selon les revendications 1 à 3, caractérisée en ce qu'elle comprend un diluant ou support inerte et éventuellement d'autres ingrédients actifs.

5. Méthode pour contrôler la végération indésirable caractérisée en ce qu'on applique au site que l'on désire contrôler, une quantité efficace du point de vue herbicide d'une composition comprenant un mélange de:

a. — un 1-hexamethyleneiminocarbothiolate d'alcoyle représenté par la formule

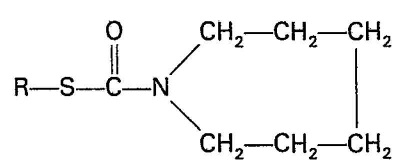

dans laquelle R est un radical alcoyle en $C_1$ à $C_4$, et;

b. — du 1,1,1-trifluoro-N-{2-méthyl-4-(phénylsulfonyl)-phényl}-méthanesulfonamide, selon un rapport pondéral de a/b compris entre 0,1/1 et 10/1.

6. Méthode selon la revendication 5, caractérisée en ce que le rapport pondéral a/b est compris entre 0,1/1 et 5/1.

7. Méthode selon la revendication 5 ou 6, caractérisée en ce que le 1-hexamethyleneiminocarbothiolate d'alcoyle est un composé dans lequel R représente un groupe éthyle.

8. Méthode pour préparer une composition herbicide selon la revendication 4, caractérisée en ce que le composant a. et le composant b. tels que définis dans la revendication 1 sont incorporés dans un support ou diluant inerte selon le rapport défini dans la revendication 1.

**Patentansprüche**

1. Synergistisches herbizides Mittel, dadurch gekennzeichnet, daß es ein Gemisch aus
(a) einem Alkyl-1-hexamethyleniminocarbothiolat der allgemeinen Formel

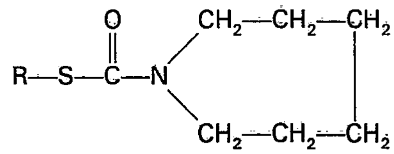

worin R für $C_1$—$C_4$-Alkyl steht, und
(b) 1,1,1-Trifluor-N-[2-methyl-4-(phenylsulfonyl)-phenyl]-methansulfonamid
im Gewichtsverhältnis von (a) zu (b) von 0,1:1 bis 10:1 enthält.

2. Mittel nach Anspruch 1, dadurch gekennzeichnet, daß das Gewichtsverhältnis von (a) zu (b) 0,1:1 bis 5:1 ist.

3. Mittel nach Anspruch 1 oder 2, dadurch gekennzeichnet, daß das Alkyl-1-hexamethyleniminearbothiolat ein solches ist, bei dem R für Ethyl steht.

4. Mittel nach einem der Ansprüche 1 bis 3, dadurch gekennzeichnet, daß es einen inerten Träger oder Verdünnungsmittel und gegebenenfalls andere Wirkstoffe enthält.

5. Verfahren zur Kontrolle von unerwünschter Vegetation, dadurch gekennzeichnet, daß man auf den Ort, wo eine Kontrolle gewünscht ist, eine herbizid wirksame Menge eines Mittels aufbringt, welches
(a) ein Alkyl-1-hexamethyleniminocarbothiolat der allgemeinen Formel

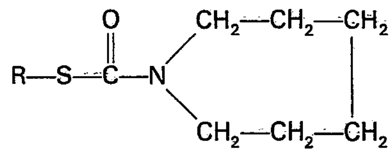

worin R für $C_1$—$C_4$ steht, und
(b) 1,1,1-Trifluor-N-[2-methyl-4-(phenylsulfonyl)-phenyl]-methansulfonamid
im Gewichtsverhältnis von (a) zu (b) von 0,1:1 bis 10:1 enthält.

6. Verfahren nach Anspruch 5, dadurch gekennzeichnet, daß das Gewichtsverhältnis von (a) zu (b) 0,1:1 bis 5:1 ist.

7. Verfahren nach Anspruch 5 oder 6, dadurch gekennzeichnet, daß das Alkyl-1-hexamethyleniminearbothiolat ein solches ist, bei dem R für Ethyl steht.

8. Verfahren zur Herstellung eines herbiziden Mittels nach Anspruch 4, dadurch gekennzeichnet, daß man die Komponente (a) und die Komponente (b), wie in Anspruch 1 definiert, in einen inerten Träger oder ein Verdünnungsmittel in dem in Anspruch 1 definierten Verhältnis einarbeitet.